# EUROPÄISCHE PATENTANMELDUNG

(11) **EP 1 508 705 A2**
(43) Veröffentlichungstag der Anmeldung: **23.02.2005**
(21) Anmeldenummer: 04019444.1
(22) Anmeldetag: 17.08.2004
(51) Int. Cl.: F16B 12/36

(54) **Gestellsystem und Verbindungselement für ein Gestellsystem**

(30) Priorität: 18.08.2003 DE 10338267
(71) Anmelder: Bergmann, Wolfgang, 70736 Fellbach (DE)
(72) Erfinder: Bergmann, Wolfgang, 70736 Fellbach (DE)
(74) Vertreter: HOEGER, STELLRECHT & PARTNER Patentanwälte

(57) **Zusammenfassung**

Um ein Verbindungselement zum Verbinden von wenigstens teilweise Verbindungselementaufnahmen umfassenden Profilelementen eines insbesondere zum Bilden von Stützstrukturen zerlegbarer Möbel, Raumteiler oder dergleichen verwendbaren Gestellsystems, wobei das Verbindungselement mindestens ein freies Ende aufweist, welches von einer Lösestellung, in welcher es mit einer der Verbindungselementaufnahmen eines der Profilelemente außer Eingriff steht, in einer Verbindungsrichtung in die Verbindungselementaufnahme einführbar ist und nach dem Einführen eine Verbindungsstellung einnimmt, so zu verbessern, daß das Gestellsystem auf einfache Weise hergestellt, zusammengebaut und wieder zerlegt werden kann, wird vorgeschlagen, daß das mindestens eine freie Ende mindestens ein Kupplungselement trägt und daß das mindestens eine Kupplungselement quer oder im wesentlichen quer zur Verbindungsrichtung reversibel verformbar ist zum Ausüben einer Kupplungskraft in der Verbindungsstellung.

## Beschreibung

Die Erfindung betrifft ein Verbindungselement zum Verbinden von wenigstens teilweise Verbindungselementaufnahmen umfassenden Profilelementen eines insbesondere zum Bilden von Stützstrukturen zerlegbarer Möbel, Raumteiler oder dergleichen verwendbaren Gestellsystems, wobei das Verbindungselement mindestens ein freies Ende aufweist, welches von einer Lösestellung, in welches es mit einer der Verbindungselementaufnahmen eines der Profilelemente außer Eingriff steht, in einer Verbindungsrichtung in die Verbindungselementaufnahme einführbar ist und nach dem Einführen eine Verbindungsstellung einnimmt.

Ferner betrifft die Erfindung ein Gestellsystem, insbesondere zum Bilden von Stützstrukturen zerlegbarer Möbel, Raumteiler oder dergleichen mit Profilelementen und mit Verbindungselementen zum Verbinden von mindestens zwei Profilelementen miteinander, wobei mindestens ein Teil der Profilelemente Verbindungselementaufnahmen aufweist, wobei mindestens ein Teil der Verbindungselemente mindestens ein freies Ende aufweist, welches von einer Lösestellung, in welcher es mit einer der Verbindungselementaufnahmen eines Profilelements außer Eingriff steht, in einer Verbindungsrichtung in eine der Verbindungselementaufnahmen einführbar ist und nach dem Einführen eine Verbindungsstellung einnimmt.

Zur Herstellung von maßgeschneiderten Einrichtungs- und Funktionsobjekten sind beispielsweise Stecksysteme umfassend Profile und Funktionselemente in Form von Verbindungselementen der eingangs beschriebenen Art bekannt. Durch Einführen, also einfaches Zusammenstecken, freier Enden der Verbindungselemente in Verbindungselementaufnahmen von Profilelementen lassen sich zum Beispiel Rahmen, Gestelle, Würfel, Träger, Wagen, Wandregale, Raumteiler, Ständer, Tische, Türen, Pinwände, Schränke, Paravente, Flip-Charts, Gewächshäuser, Aquarien, Dämmhauben, Windfänge, Türbedachungen, Messestände, Empfangstheken, Gartentüren, Multimedia-Center und dergleichen bilden. Nachteilig bei den bekannten Stecksystemen ist, daß die Profile und Verbindungselemente in ihren Abmessungen und Toleranzen so präzise aufeinander abgestimmt sind, daß sich die Verbindungselemente zwar relativ einfach in die Verbindungselementaufnahmen einführen, aber nur schwer aus der eingeführten Stellung, also der Verbindungsstellung, lösen lassen. Daher müssen bei den bekannten Systemen Montageschritte im voraus besonders genau geplant werden.

Ein weiteres Beispiel für ein Gestellsystem, welches eine Steckverbindung verwendet, ist beispielsweise aus der DE 196 52 969 C1 bekannt. Darin wird ein System beschrieben, bei welchem in der Verbindungsstellung Magnete das Verbindungselement in der Verbindungselementaufnahme halten. Eine solche Ausgestaltung ist jedoch äußerst aufwendig in der Herstellung und birgt zudem die Gefahr, daß magnetisch empfindliche Gegenstände geschädigt werden können.

Es ist daher Aufgabe der vorliegenden Erfindung, ein Gestellsystem und ein Verbindungselement für ein Gestellsystem so zu verbessern, daß das Gestellsystem auf einfache Weise hergestellt, zusammengebaut und wieder zerlegt werden kann.

Diese Aufgabe wird bei einem Verbindungselement der eingangs beschriebenen Art erfindungsgemäß dadurch gelöst, daß das mindestens eine freie Ende mindestens ein Kupplungselement trägt und daß das mindestens eine Kupplungselement quer oder im wesentlichen quer zur Verbindungsrichtung reversibel verformbar ist zum Ausüben einer Kupplungskraft in der Verbindungsstellung quer oder im wesentlichen quer zur Verbindungsrichtung.

Aufgrund der reversiblen Verformbarkeit des Kupplungselements ist es möglich, ein Verbindungselement in eine Verbindungselementaufnahme eines Profilelements auf einfache Weise einzuführen und wieder zu entfernen. Dadurch läßt sich ein Gestellsystem in gewünschter Weise auf- und wieder abbauen. Die Stabilität des zusammengesetzten Gestellsystems wird gewährleistet durch die von den Kupplungselementen ausgeübten Kupplungskräfte. Durch Ausüben von Kupplungskräften quer oder im wesentlichen quer zur Verbindungsrichtung, beispielsweise vom Kupplungselement direkt auf die Verbindungselementaufnahme, werden im wesentlichen Normalkräfte vom Verbindungselement auf die Verbindungselementaufnahme des Profilelements ausgeübt, so daß zum Lösen einer Verbindung zwischen dem Verbindungselement und der Verbindungselementaufnahme entsprechende Haftreibungskräfte in der Verbindungsrichtung überwunden werden müssen. Auf diese Weise wird ein unbeabsichtigtes Lösen der Verbindung zwischen Verbindungselement und Verbindungselementaufnahme verhindert und eine ausreichende Stabilität des Gestellsystems sichergestellt.

Besonders günstig ist es, wenn das Verbindungselement in der Verbindungsstellung kraftschlüssig in der Verbindungselementaufnahme gehalten ist. Eine Verbindung allein aufgrund eines Kraftschlusses ermöglicht einen besonders einfachen Aufbau sowohl des Verbindungselements als auch der Verbindungselementaufnahme und stellt dennoch eine sichere Verbindung zwischen beiden Teilen sicher.

Ein besonders einfacher Aufbau des Verbindungselements ergibt sich, wenn das mindestens eine Kupplungselement ein Klemmelement ist.

Vorteilhaft ist es, wenn das mindestens eine Kupplungselement das mindestens eine freie Ende mindestens teilweise umgibt. Auf diese Weise läßt sich eine Richtung, in welcher die Kupplungskraft wirken soll, in gewünschter Weise vorgeben. Umgibt das Kupplungselement das mindestens eine freie Ende vollständig, so wird quer zur Umfangsrichtung allseitig eine Kupplungskraft ausgeübt, wodurch sich eine besonders sichere Verbindung zwischen dem Verbindungselement und der Verbindungselementaufnahme ergibt.

Besonders einfach läßt sich das mindestens eine Kupplungselement reversibel verformen, wenn es quer oder im wesentlichen quer zur Verbindungsrichtung elastisch ist. Dies ermöglicht zudem die Auswahl zahlreicher Materialien zur Herstellung des Kupplungselements, beispielsweise Elastomere oder auch Federn aus Metall.

Zum Vereinfachen des Zusammenbauens des Gestellsystems ist es günstig, wenn das Verbindungselement eine Kupplungselementaufnahme zum mindestens teilweisen Aufnehmen des Kupplungselements aufweist. Das beispielsweise in der Kupplungselementaufnahme gehaltene Kupplungselement braucht für den Zusammenbau des Gestellsystems nicht zusätzlich gehalten zu werden. Es genügt, das mindestens eine freie Ende des Verbindungselement in eine Verbindungselementaufnahme einzuführen, um eine Verbindung herzustellen.

Ein besonders einfacher Aufbau des Verbindungselements ergibt sich, wenn die Kupplungselementaufnahme eine das freie Ende des Verbindungselements mindestens teilweise umgebende Nut umfaßt. In eine solche Nut kann das Kupplungselement teilweise eintauchen und wird darin sicher gehalten oder kann darin mit Befestigungsmitteln, wie zum Beispiel Klebemittel, oder durch Löten fixiert werden.

Besonders einfach wird der Aufbau des Verbindungselements, wenn die Kupplungselementaufnahme eine Ringnut umfaßt. Beispielsweise kann eine Ringnut einen O-Ring aufnehmen und halten, welcher als Kupplungselement dienen kann, wodurch eine Relativbewegung zwischen dem Kupplungselement und dem Verbindungselement verhindert wird.

Je nach gewünschten Profilformen der Profilelemente kann es vorteilhaft sein, wenn das freie Ende des Verbindungselementes einen runden, ovalen, quadratischen oder rechteckigen Querschnitt aufweist.

Ein besonders einfacher Aufbau ergibt sich, wenn das Verbindungselement im wesentlichen zylindrisch ausgebildet ist. Es nimmt dann in etwa die Form eines Dübels ein, welcher zwei freie Enden aufweist, welche in zwei Verbindungselementaufnahmen eingeführt werden können. Dadurch kann auf einfache Weise eine Verbindung zwischen zwei Profilelementen hergestellt werden.

Gemäß einer bevorzugten Ausführungsform der Erfindung kann vorgesehen sein, daß das Verbindungselement ein zweites freies Ende aufweist. Dies ermöglicht es, mit dem Verbindungselement zwei Profilelemente miteinander zu verbinden.

Vorzugsweise trägt das zweite freie Ende mindestens ein zweites Kupplungselement. Das zweite Kupplungselement kann identisch zum ersten Kupplungselement ausgebildet sein, aber auch völlig anders.

Um eine dauerhafte, besonders schwer lösbare Verbindung zwischen einem der Verbindungselemente und einem Profilelement herzustellen, ist es günstig, wenn das mindestens eine zweite Kupplungselement ein Gewinde ist. Beispielsweise läßt sich dann das zweite freie Ende des Verbindungselements in eine korrespondierende Verbindungselementaufnahme einschrauben.

Von Vorteil ist es, wenn das zweite freie Ende des Verbindungselementes in Form eines Fußes ausgebildet ist. Diese Ausgestaltung ermöglicht es, das Verbindungselement als Stützfuß für das Gestellsystem zu nutzen. Ein solcher Fuß kann besonders einfach mit einem Profilelement verbunden werden, beispielsweise einfach durch Zusammenstecken.

Das Kupplungselement kann, wie bereits oben dargelegt, ein O-Ring sein. O-Ringe sind besonders günstig und einfach in der Herstellung und bei Bedarf leicht auswechselbar. Insbesondere läßt sich durch Variation einer Querschnittsfläche des O-Rings eine Kupplungskraft in gewünschter Weise variieren.

Gemäß einer weiteren bevorzugten Ausführungsform der Erfindung kann vorgesehen sein, daß das Kupplungselement eine Federstahlhülse ist. Auch Federstahlhülsen lassen sich besonders einfach herstellen und durch Auswahl des Federstahls lassen sich Kupplungskräfte in gewünschter Weise voreinstellen.

Denkbar wäre es, die Federstahlhülse in Form eines gecrimpten Ringes auszubilden. Besonders günstig ist es jedoch, wenn die Federstahlhülse mindestens zwei das mindestens eine freie Ende mindestens teilweise umgebende Abschnitte umfaßt und wenn mehrere, vom mindestens einen freien Ende weg weisend gekrümmte und die mindestens zwei Abschnitte verbindende federnde Stege vorgesehen sind. Nach Einführen des freien Endes des Verbindungselements in eine der Verbindungselementaufnahmen werden die federnden Stege so verformt, daß sie vorzugsweise großflächig an der Verbindungselementaufnahme anliegen können, was zu einer besonders guten Verbindung zwischen dem Verbindungselement und der Verbindungselementaufnahme führt.

Um die Zahl der Bauelemente des Gestellsystems möglichst gering zu halten und die Fertigung der Verbindungselemente zu vereinfachen, ist es vorteilhaft, wenn das Kupplungselement einstückig ausgebildet ist.

Gemäß einer bevorzugten Ausführungsform der Erfindung kann vorgesehen sein, daß die Kupplungselementaufnahme mindestens einen Anschlag aufweist zum Begrenzen einer Relativbewegung des Kupplungselements und des mindestens einen freien Endes in der Verbindungsrichtung und/oder entgegengesetzt zur Verbindungsrichtung. Durch den mindestens einen Anschlag wird sichergestellt, daß das Kupplungselement an der gewünschten Position am Verbindungselement verbleibt und eine sichere Verbindung zwischen dem Verbindungselement und der Verbindungselementaufnahme gewährleistet wird. Insbesondere von Vorteil ist es, wenn zwei in entgegengesetzter Richtung wirkende Anschläge vorgesehen sind, zwischen denen das Kupplungselement gehalten wird. Derartige Anschläge werden beispielsweise durch Seitenwände einer Nut gebildet.

Um eine Standzeit des Gestellsystems zu erhöhen und besonders viele Zusammenbau- und Zerlegezyklen zu ermöglichen, ist es günstig, wenn das mindestens eine Kupplungselement in der Lösestellung im wesentlichen kräftefrei an dem mindestens einen Anschlag anliegt und wenn sich das mindestens eine Kupplungselement in der Verbindungsstellung an dem mindestens einen Anschlag abstützt. Der Anschlag nimmt auf diese Weise die vom Kupplungselement ausgeübten Kupplungskräfte auf und hält das Kupplungselement in der gewünschten Position.

Insbesondere dann, wenn mit einem Verbindungselement zwei Profilelemente verbunden werden sollen, beispielsweise nur durch Zusammenstecken, ist es vorteilhaft, wenn das Verbindungselement mindestens einen Anschlag aufweist zum Festlegen einer Einführtiefe des mindestens einen freien Endes in eine der Verbindungselementaufnahmen. Dadurch kann sichergestellt werden, daß das Verbindungselement nicht zu tief in eine Verbindungselementaufnahme eingeführt wird. Dies ist beispielsweise in Fällen wichtig, bei denen die Profilelemente rohrförmig ausgebildet sind und keine Tiefenbegrenzung oder keinen Tiefenanschlag für das Verbindungselement aufweisen.

Die eingangs gestellte Aufgabe wird ferner bei einem Gestellsystem der eingangs beschriebenen Art erfindungsgemäß dadurch gelöst, daß das Gestellsystem mindestens eines der oben beschriebenen Verbindungselemente umfaßt.

Durch Verwendung eines solchen Verbindungselements lassen sich Gestellsysteme auf einfache Weise herstellen, durch Zusammenstecken aufbauen und auch wieder abbauen.

Günstig ist es, wenn mindestens eines der Verbindungselemente in der Verbindungsstellung in einer der Verbindungselementaufnahmen mindestens eines der Profilelemente kraftschlüssig gehalten ist. Auf diese Weise läßt sich ein Gestellsystem einfach durch Zusammenstecken auf- und wieder abbauen. Anders als bei Formschlußverbindungen werden keine beweglichen und ineinandergreifende Teile benötigt, was den Aufbau sowohl der Verbindungselemente als auch der Profilelemente wesentlich vereinfacht.

Gemäß einer bevorzugten Ausführungsform der Erfindung kann vorgesehen sein, daß mindestens eine der Verbindungselementaufnahmen in der Verbindungsstellung be- und/oder entlüftbar ist. Dies kann beispielsweise durch eine Fluidverbindung mit der Umgebung realisiert werden. Eine solche Be- oder Entlüftung ist besonders dann vorteilhaft, wenn das Kupplungselement die Verbindungselementaufnahme gasdicht zu ihrer Einführöffnung hin abschließt, wodurch das in der Verbindungselementaufnahme hinter dem Kupplungselement enthaltene Gas komprimiert und so eine Einführtiefe des Verbindungselements begrenzt wird. Dies ist beispielsweise der Fall, wenn als Kupplungselement ein O-Ring verwendet wird.

Um die Stabilität des Gestellsystems zu erhöhen, ist es günstig, wenn die Verbindungselementaufnahme einen zu einem Querschnitt des mindestens einen freien Endes korrespondierenden Querschnitt aufweist. Im Gegensatz zu den aus dem Stand der Technik bekannten Stecksystemen sind bei einem erfindungsgemäßen Gestellsystem größere Fertigungstoleranzen möglich, da Kupplungskräfte durch das verformbare Kupplungselement aufgebracht werden.

Grundsätzlich können die Verbindungselemente alle von den Profilelementen trennbar oder getrennt sein. Um den Aufbau des Gestellsystems zu erleichtern und zu beschleunigen, ist es vorteilhaft, wenn mindestens eines der Verbindungselemente unlösbar mit einem der Profilelemente verbunden ist. Auf diese Weise lassen sich Profilelemente direkt miteinander verbinden, indem nämlich das mindestens eine freie Ende des unlösbar mit einem der Profilelemente verbundenen Verbindungselements in eine Verbindungselementaufnahme eines weiteren Profilelements eingeführt wird.

Eine besonders sichere Verbindung des Verbindungselements mit einem Profilelement ergibt sich, wenn das mindestens eine Verbindungselement mit dem einen der Profilelemente verklebt und/oder verschraubt ist.

Vorzugsweise ist die Verbindungselementaufnahme mindestens eines der Profilelemente mit einem zu dem mindestens einen zweiten Kupplungselement des mindestens einen Verbindungselements korrespondierenden Profilelementkupplungselement versehen. Damit läßt sich beispielsweise eine weitere und/oder andere Verbindung zwischen dem Profilelementkupplungselement und dem zweiten Kupplungselement herstellen als zwischen einer Verbindungselementaufnahme und dem ersten Kupplungselement.

Ein besonders einfacher Aufbau des Gestellsystems ergibt sich, wenn das Profilelementkupplungselement ein Gewinde umfaßt. Dies ermöglicht es, das zweite freie Ende des Verbindungselements, welches mit einem Gewinde versehen sein kann, in die Verbindungselementaufnahme des Profilelements einzuschrauben.

Profilelemente können grundsätzlich in Form langgestreckter Profile ausgebildet sein und zwei freie Enden aufweisen. Gemäß einer bevorzugten Ausführungsform der Erfindung kann jedoch vorgesehen sein, daß mindestens ein Profilelement in Form eines Knotenelements ausgebildet ist und daß das Knotenelement mit mindestens zwei weiteren Profilelementen verbindbar ist. Ein Knotenelement zeichnet sich beispielsweise dadurch aus, daß Profilelemente in unterschiedlichen Verbindungsrichtung an das Knotenelement herangeführt und mit diesem verbunden werden können. Beispielsweise lassen sich an einem Knotenelement Profilelemente rechtwinklig oder unter anderen vorgegebenen Winkeln zusammenfügen.

Vorzugsweise ist das Knotenelement mit zwei, drei, vier, fünf oder sechs weiteren Profilelementen verbindbar. Dies bedeutet, daß das Knotenelement zwei bis sechs oder auch mehrere Verbindungselementaufnahmen umfaßt, welche Verbindungselemente aufnehmen können, die weiteren Profilelementen zugeordnet und/oder mit diesen verbunden werden können.

Um einen Stand des Gestellsystems auf einfache Weise zu ermöglichen, und ein Aufliegen von Profilen auf einer Grundfläche zu vermeiden, ist es günstig, wenn das Gestellsystem mindestens einen Fuß umfaßt. Dieser kann insbesondere höhenverstellbar sein.

Vorzugsweise ist der mindestens eine Fuß in eine Verbindungselementaufnahme eines der Profilelemente einführbar. Auf diese Weise werden keine besonderen Ankoppelelemente für den Fuß an den Profilelementen benötigt. Der Fuß kann direkt, beispielsweise wie ein Verbindungselement, in eine der Verbindungselementaufnahmen eingeführt werden.

Um eine Höhenverstellung auf einfache Weise zu realisieren, ist es günstig, wenn der mindestens eine Fuß in eine Verbindungselementaufnahme eines der Profilelemente einschraubbar ist.

Grundsätzlich können die Profilelemente eine beliebige Form aufweisen. Besonders einfach wird der Aufbau jedoch, wenn mindestens ein Profilelement rohrförmig ausgebildet ist. Insbesondere kann ein rohrförmiges Profil einen runden oder rechteckigen, insbesondere quadratischen Querschnitt aufweisen.

Damit auf einfache Weise Rahmen ausgebildet werden können, ist es vorteilhaft, wenn mindestens ein Profilelement abgewinkelt ist zum Verbinden mit mindestens zwei weiteren Profilelementen in quer zueinander verlaufenden Verbindungsrichtungen.

Die Profilelemente können einen inneren und einen äußeren Querschnitt aufweisen, wobei es insbesondere günstig ist, wenn die Profilelemente einen runden oder eckigen äußeren Querschnitt aufweisen.

Gemäß einer bevorzugten Ausführungsform der Erfindung kann vorgesehen sein, daß die Profilelemente eine Außenhülle aufweisen und daß die mindestens eine Verbindungselementaufnahme und die Außenhülle verbindende Trägerelemente vorgesehen sind. Auf diese Weise lassen sich Verbindungselementaufnahmen in gewünschter Weise anordnen, und zwar unabhängig von einer äußeren Form der Profilelemente.

Um eine Einführtiefe des Verbindungselements in die Verbindungselementaufnahme zu begrenzen, ist es vorteilhaft, wenn mindestens eines der Profilelemente einen Anschlag aufweist.

Die nachfolgende Beschreibung bevorzugter Ausführungsformen der Erfindung dient im Zusammenhang mit der Zeichnung der näheren Erläuterung. Es zeigen:
- Figur 1:: ein erstes Ausführungsbeispiel eines Verbindungselements mit entferntem Kupplungselement;
- Figur 2:: das Verbindungselement aus Figur 1 mit angefügtem Kupplungselement;
- Figur 3:: ein zweites Ausführungsbeispiel eines Verbindungselements mit entferntem Kupplungselement;
- Figur 4:: das Verbindungselement aus Figur 3 mit angefügtem Kupplungselement;
- Figur 5:: ein Teil eines Gestellsystems mit einem Verbindungselement aus Figur 1;
- Figur 6:: ein drittes Ausführungsbeispiels eines Kupplungselements und eines Knotens;
- Figur 7:: ein mit einem Knoten verbundenes Profilelement;
- Figur 8:: das in Figur 7 dargestellte Profilelement mit Knoten mit weiteren Profilelementen;
- Figur 9:: eine alternative Ausführungsform eines Profilelements mit Verbindungselement und Knoten;
- Figur 10:: ein weiteres Profilelement mit Verbindungselement und Knoten;
- Figur 11:: eine alternative Ausführungsform eines Profilelements mit Verbindungselement und Knoten;
- Figur 12:: zwei miteinander gekoppelte rohrförmige Profilelemente;
- Figur 13:: ein Winkelverbinder mit Verbindungselement und Profilelement;
- Figur 14:: eine alternative Ausgestaltung eines Winkelverbinders mit Profilelement und Knoten;
- Figur 15:: ein Knotenelement mit Fuß; und
- Figur 16:: verschiedene Knotenformen von Verbindern.

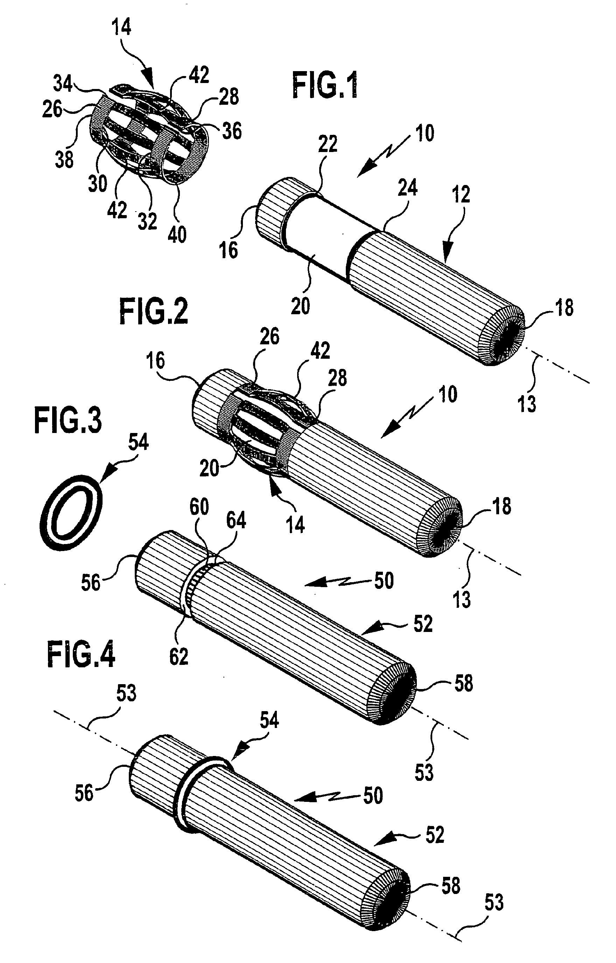

In Figur 1 ist ein insgesamt mit dem Bezugszeichen 10 versehenes Verbindungselement in Form eines Steckverbinders dargestellt, welcher einen zylindrischen, eine Längsachse 13 definierenden Grundkörper 12 und ein Kupplungselement in Form einer Federstahlhülse 14 umfaßt. Der Grundkörper 12 weist zwei freie Enden 16 und 18 auf, sowie einen im Durchmesser reduzierten Abschnitt 20, welcher eine Kupplungselementaufnahme bildet. Der Abschnitt 20 bildet somit eine Art Nut, deren Breite in etwa dem doppelten Durchmesser des Abschnitts 20 entspricht. Der Abschnitt 20 wird beidseitig durch Anschläge 22 und 24 begrenzt, wobei der Anschlag 22 eine Ringfläche umfaßt, welche in Richtung auf das freie Ende 18 hin weist, der Anschlag 24 eine Ringfläche, welche auf das freie Ende 16 hin weist.

Die Federstahlhülse 14 umfaßt zwei flache Metallringe 26 und 28, deren Innendurchmesser dem Außendurchmesser des Abschnitts 20 entspricht. Beide Ringe 26 und 28 sind jeweils mit einem Schlitz 34 beziehungsweise 36 versehen, so daß die beiden Ringe 26 und 28 aufgespreizt und beispielsweise vom freien Ende 16 her kommend auf den Abschnitt 20 aufgeschoben werden können. Aufeinander zu weisende Stirnflächen 30 und 32 der Ringe 26 und 28 sind über eine Vielzahl konvex radial nach außen gekrümmter Stege 42 aus Federstahl miteinander verbunden.

Im zusammengesetzten Zustand, wie in Figur 2 dargestellt, liegen voneinander weg weisende Stirnflächen 38 und 40 der Ringe 26 und 28 an den Anschlägen 22 beziehungsweise 24 an. Je nach Länge der Stege 42 können sich die Stirnflächen 38 und 40 auch an den Anschlägen 22 und 24 abstützen und so die Stege 42 schon etwas unter Vorspannung radial vom Abschnitt 20 weg halten.

Ein zweites Ausführungsbeispiel eines erfindungsgemäßen Verbindungselements ist in Form eines Steckverbinders in den Figuren 3 und 4 insgesamt mit dem Bezugszeichen 50 versehen und umfaßt ebenfalls einen eine Längsachse 53 definierenden Grundkörper 52 sowie ein Kupplungselement in Form eines elastischen O-Rings 54 aus Kunststoff. Der langgestreckte zylindrische Grundkörper 52 weist zwei freie Enden 56 und 58 auf und ist mit einer Ringnut 60 versehen, welche zwei als Anschläge dienende Nutseitenwände 62 und 64 aufweist.

Das Verbindungselement wird zusammengesetzt, indem der O-Ring 54 beispielsweise vom freien Ende 56 her kommend, über den Grundkörper 52 geschoben wird, bis er in die Ringnut 16 eintaucht und zwischen den beiden Nutseitenwänden 62 und 64 gehalten wird.

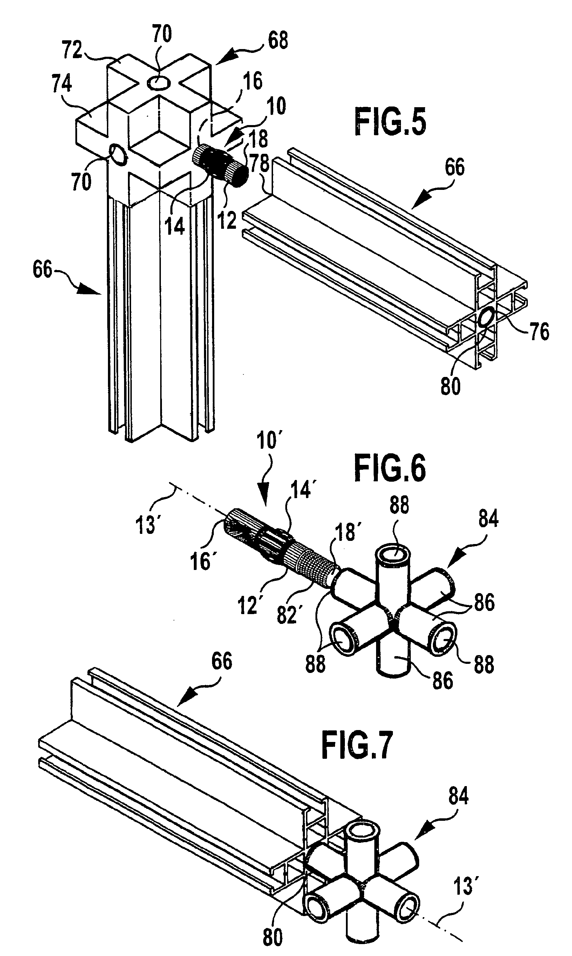

In Figur 5 ist dargestellt, wie zwei Profilträger 66 über ein Knotenelement 68 mit Steckverbindern 10 verbunden werden können. Das Knotenelement 68 ist in Form eines Würfels aufgebaut, dessen sechs identische Seitenflächen 72 jeweils zentral mit einer Sacklochbohrung 70 versehen sind, deren Längsachsen jeweils rechtwinklig aufeinander stehen und sich im Zentrum des Knotenelements 68 schneiden. Die acht Ecken des würfelförmigen Knotenelements 68 sind jeweils mit würfelförmigen Aussparungen 74 versehen.

Das Profilelement 66 ist im Querschnitt kreuzförmig aufgebaut und weist eine vierzählige Symmetrie auf. Der Querschnitt des Profilträgers 66 entspricht dem Querschnitt der aufgrund der vorgesehenen Aussparungen 74 verbliebenen Seitenflächen 72 des Knotenelements 68. Der beispielsweise stranggepreßte Profilträger 66, welcher aus Aluminium hergestellt sein kann, weist eine seine Symmetrieachse umgebende Durchgangsbohrung 76 auf, welche gleichzeitig eine Verbindungsrichtung definiert und als Verbindungselementaufnahme dient. Zum Verbinden eines der beiden freien Enden 78 und 80 des Profilträgers 66 mit dem Knotenelement 68 wird ein Steckverbinder 10 verwendet, welcher einerseits in die Sacklochbohrung 70 parallel zu seiner Längsachse 13 eingeführt wird, also in einer durch seine Längsachse 13 definierten Verbindungsrichtung.

Anschließend wird der Profilträger 66 an den Steckverbinder 10 herangeführt, bis dieser in die Durchgangsbohrung 76 vom freien Ende 78 her kommend, eintaucht. Der Innendurchmesser sowohl der Sacklochbohrung 70 als auch der Durchgangsbohrung 76 ist nur unwesentlich größer als der Außendurchmesser des Grundkörpers 12, so daß die Federstahlhülse 14 nach Einführen in die Sacklochbohrung 70 beziehungsweise die Durchgangsbohrung 76 in Richtung auf den Abschnitt 20 entgegen der Wirkung der federnden Stege 42 verformt wird. Dadurch üben die Stege 42 eine Kupplungskraft quer zur Längsachse 13 des Grundkörpers 12 in Richtung auf innere Oberflächen der Sacklochbohrung 70 beziehungsweise der Durchgangsbohrung 76 aus. In analoger Weise können mittels eines weiteren Steckverbinders 10 weitere Profilträger 66 mit dem Knotenelement 68 verbunden werden. Es könnte auch ein Steckverbinder mit zwei Federstahlhülsen 14 verwendet werden, von denen jeweils eine in eine Sacklochbohrung 70 und die andere in eine Durchgangsbohrung 76 eintaucht.

Alternativ wäre es denkbar, anstelle des Steckverbinders 10 einen Steckverbinder 50 zu nehmen, welcher mit zwei O-Ringen 54 versehen ist, so daß beispielsweise das freie Ende 56 des Steckverbinders 50 mit einem ersten O-Ring 54 in die Sacklochbohrung 70 eingeführt wird, das freie Ende 58 mit einem weiteren O-Ring 54 in die Durchgangsbohrung 76 des Profilträgers 66. Jeder der O-Ringe 54 wird in Richtung auf die Ringnut 60 hin zusammengedrückt und übt damit eine Kupplungskraft quer zur Längsachse 53 des Grundkörpers 52 in Richtung auf die Sacklochbohrung 70 beziehungsweise die Durchgangsbohrung 76 aus.

In Figur 6 ist eine abgewandelte Form des Steckverbinders 10 insgesamt mit dem Bezugszeichen 10' versehen. Benachbart seinem freien Ende 18 ist der Grundkörper 12' mit einem Außengewinde 82 versehen. Ansonsten entspricht der Steckverbinder 10' im wesentlichen dem Steckverbinder 10.

In Figur 6 ist ferner ein Knotenstern 84 dargestellt, welcher aus drei sich rechtwinklig schneidenden Hülsenabschnitten 86 aufgebaut ist, die sich im Zentrum des Knotensterns 84 schneiden. Auf diese Weise werden sechs Verbindungselementaufnahmen in Form von Zylinderbohrungen 88 ausgebildet, welche mit einem Innengewinde versehen sind, welches zum Außengewinde 82' korrespondiert. Zum Verbinden des Steckverbinders 10' mit dem Knotenstern 84 wird der Steckverbinder 10' von seinem freien Ende 18' her kommend mittels des Außengewindes 82' in eine der Zylinderbohrungen 88 eingeschraubt.

Der mit einem Steckverbinder 10' versehene Knotenstern 84 kann dann auf einfache Weise beispielsweise mit dem Profilträger 66 verbunden werden, wie dies in Figur 7 dargestellt ist. Hierzu wird das freie Ende 16' des Steckverbinders 10' beispielsweise in die Durchgangsbohrung 76 des Profilträgers 66 von dessen freiem Ende 80 her kommend hineingesteckt, so daß die Stege 42 elastisch verformt werden und eine Kupplungskraft quer zur Längsachse 13' des Grundkörpers 12' auf eine Innenwand der Durchgangsbohrung 76 ausüben. Auf diese Weise wird, analog wie beim Steckverbinder 10 oder beim Steckverbinder 50, eine kraftschlüssige Verbindung zwischem dem Profilträger 66 und dem Steckverbinder 10' hergestellt.

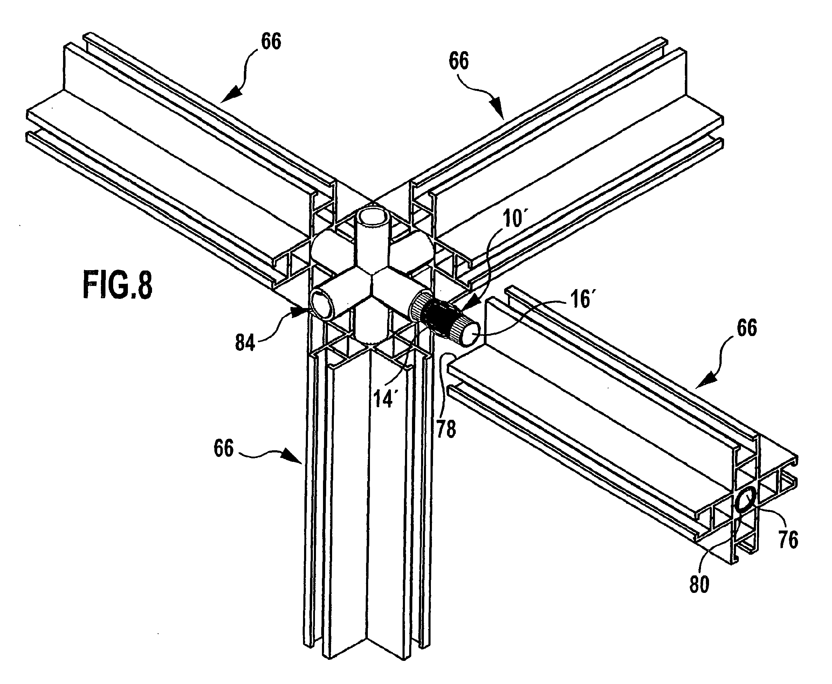

Ausgehend von der Verbindung des Profilträgers 66 und des Knotensterns 84 lassen sich, wie in Figur 8 dargestellt, weitere Profilträger 66 in gleicher Weise wie im Zusammenhang mit der Figur 7 beschrieben mit dem Knotenstern 84 verbinden. Insgesamt können 6 Profilträger 66 an den Knotenstern 84 angekoppelt werden.

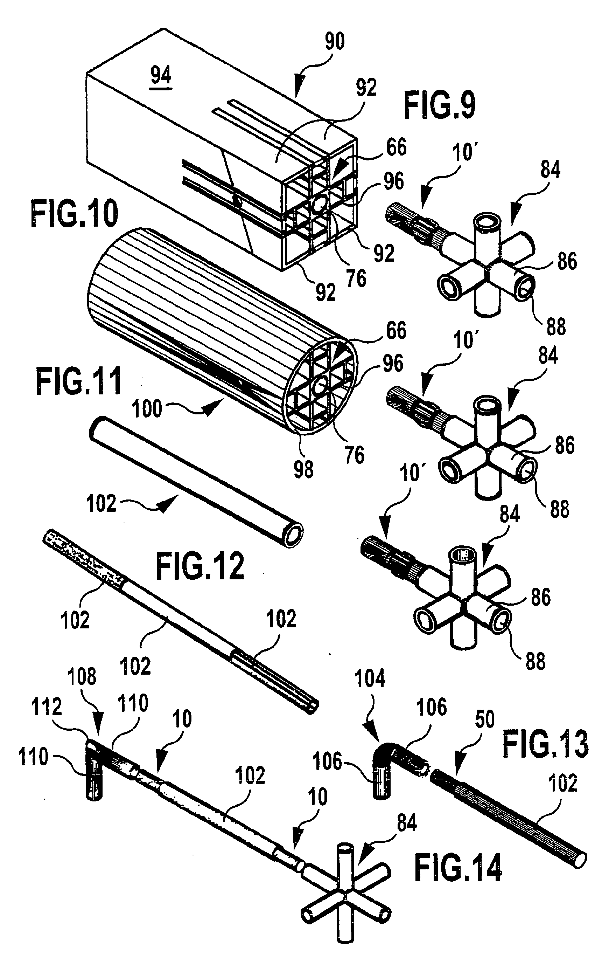

In Figur 9 ist eine alternative Ausgestaltung eines Profilträgers insgesamt mit dem Bezugszeichen 90 versehen. Der Profilträger 90 besteht aus einem Profilträger 66, welcher zusätzlich mit vier im Querschnitt L-förmigen Verkleidungen 92 versehen ist, so daß insgesamt eine quadratische Außenhülle 94 des Profilträgers 90 gebildet wird. Quer von der Durchgangsbohrung 76 abstehende Längsträger 96 dienen zur Fixierung der Außenhülle 94 und verbinden diese mit der eine Verbindungselementaufnahme bildenden Durchgangsbohrung 76. Der Profilträger 90 kann analog dem Profilträger 66 beispielsweise mittels eines Steckverbinders 10', welcher in eine Zylinderbohrung 88 des Knotensterns 84 eingeschraubt und/oder eingeklebt sein kann, verbunden werden.

Ein im Querschnitt eine kreisförmige Außenhülle 98 aufweisender, insgesamt mit dem Bezugszeichen 100 versehener Profilträger ist in Figur 10 dargestellt. Die Außenhülle 98 umspannt einen Profilträger 66, wie er im Zusammenhang mit den Figuren 5, 7 und 8 beschrieben ist. Von der Durchgangsbohrung 76 des Profilträgers 76 abstehende Längsträger 96 verbinden die Außenhülle 98 mit der eine Verbindungselementaufnahme bildenden Durchgangsbohrung 76. Auch der Profilträger 100 kann beispielsweise mittels eines Steckverbinders 10' mit einem Knotenstern 84 oder Profilelementen anderer Form verbunden werden.

Anstelle kompliziert aufgebauter Profilträger 66, 90 oder 100, können auch Profilelemente in Form von in Figur 11 dargestellten Profilrohren 102 vorgesehen sein, welche aus dem gleichen Rohrmaterial aufgebaut sind wie beispielsweise die Hülsenabschnitte 86 des Knotensterns 84. Mit Profilrohren 102, welche langgestreckt oder gekrümmt sein können, lassen sich in Verbindung mit Knotensternen 84 Gestellsysteme bilden, welche einen einheitlichen Querschnitt aufweisen.

Um gerade Profilträger zu verlängern, können, wie in Figur 12 dargestellt, mehrere gerade Profilrohre 102 mittels Steckverbindern 10, 10' oder 50 verbunden und zu einem langen Profilelement zusammengesteckt und/oder geschraubt werden.

Anstelle eines Knotensterns 84 können auch Winkelverbinder in der in Figur 13 dargestellten Form zum Aufbau von Gestellsystemen verwendet werden, welche im wesentlichen aus einem L-förmig gekrümmten Rohr mit zwei freien Schenkeln 106 bestehen, die einen Winkel von 90° relativ zueinander bilden. Die freie Schenkel 106 bildenden Rohrabschnitte des Winkelverbinders 104 dienen als Verbindungselementaufnahmen für beispielsweise einen Steckverbinder 50, dessen eines freies Ende beispielsweise in ein Profilrohr 102 eingeführt und mit diesem verklebt sein kann.

Eine weitere Form eines Winkelverbinders 108 ist in Figur 14 dargestellt. Er besteht aus zwei auf Gehrung geschnitten und miteinander verbundenen Rohrstücken 110, so daß eine spitze Kante 112 ausgebildet wird. Wie in Figur 14 zu sehen, kann ein solcher Winkelverbinder 108 mittels eines Steckverbinders 10 mit einem Profilrohr 102 verbunden werden, welches an seinem anderen Ende wiederum mit einem Steckverbinder 10, 10' oder 50 mit einem Knotenstern 84 verbunden werden kann, und zwar einfach nur durch Zusammenstecken.

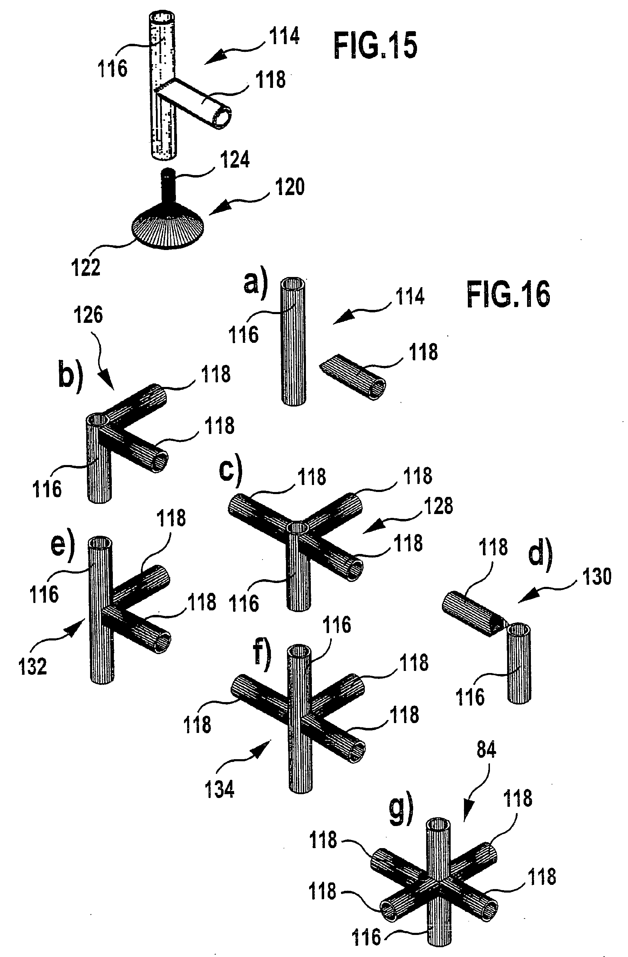

In Figur 15 ist ein T-Verbinder 114 dargestellt, welcher aus einem Rohrstück 116 und einem mittig an diesem befestigten Rohrstutzen 118 besteht, so daß insgesamt ein T-förmiges Profil gebildet wird. Jedes der freien Enden kann mit einem Innengewinde versehen sein, so daß ein insgesamt mit dem Bezugszeichen 120 versehener Fuß, welcher einen kegelstumpfförmigen Grundkörper 122 und einen symmetrisch von diesem abstehenden Gewindebolzen 124 umfaßt, mit einem der freien Enden des T-Verbinders 114 verschraubt werden kann. Der Fuß 120 ist auf einfache Weise in seiner Höhe verstellbar, und zwar in dem der Gewindebolzen 124 in einen Rohrabschnitt des T-Verbinders 114 tiefer hinein- oder weiter herausgeschraubt wird.

Figur 16 zeigt insgesamt sieben verschiedene Winkelverbinder, wobei in Figur 16a der T-Verbinder 114 mit den Rohrstück 116 und dem Rohrstück 118 vor dem Zusammenfügen dargestellt ist.

In Figur 16b ist ein Eckverbinder 126 dargestellt, welcher aus einem Rohrstück 116 und zwei Rohrstutzen 118 aufgebaut ist, die alle jeweils unter einem Winkel von 90° relativ zu einander verbunden sind, wobei die beiden Rohrstutzen 118 an einem Ende des Rohrstücks 116 angeordnet sind.

Figur 16c zeigt einen insgesamt mit dem Bezugszeichen 128 versehenen Zwischenverbinder, welcher zusätzlich zum Eckverbinder 126 einen weiteren Rohrstutzen 118 umfaßt, welcher in Verlängerung eines der beiden Rohrstutzen 118 am gleichen Ende des Rohrstücks 116 angeordnet ist.

In Figur 16d ist ein Winkelverbinder 130 dargestellt, welcher aus einem Rohrstück 116 und einem Rohrstutzen 118 gebildet wird, wobei der Rohrstutzen 118 an einem Ende des Rohrstücks 116 angebracht wird.

Ein in seiner Funktion dem Zwischenverbinder 128 entsprechender Zwischenverbinder 132 ist in Figur 16e dargestellt. Er ist aus einem Rohrstück 116 und zwei Rohrstutzen 118 hergestellt, wobei die beiden Rohrstutzen 118 mittig und jeweils unter einem Winkel von 90° relativ zueinander und zum Rohrstück 116 am Rohrstück 116 angebracht sind.

Der in Figur 16f dargestellte Zwischenverbinder 132 wird aus dem Zwischenverbinder 132 hergestellt, indem zusätzlich ein Rohrstutzen 118 diametral einem der beiden anderen Rohrstutzen 118 gegenüberliegend und in dessen Verlängerung am Rohrstück 118 angebracht wird.

Figur 16g zeigt nochmals den Winkelverbinder 84, welcher aus einem Rohrstück 116 und vier Rohrstutzen 118 gebildet wird, und zwar ausgehend vom Zwischenverbinder 134 durch zusätzliches Anbringen eines vierten Rohrstutzens 118.

Die Grundkörper der Steckverbinder 10, 10' und 50 können aus Metall oder Kunststoff gefertigt sein. Die Profilträger 66, 90 und 100 sowie die Profilrohre 102 können ebenfalls aus Metall oder Kunststoff gefertigt sein.

Ferner können alle oben beschriebenen Steckverbinder zum Verbinden von Profilelementen mit allen vorgestellten Profilelementen beliebig kombiniert werden.

## Patentansprüche

1. Verbindungselement (10, 50) zum Verbinden von wenigstens teilweise Verbindungselementaufnahmen (70; 76; 88) umfassenden Profilelementen (66; 68; 84; 90; 100; 102) eines insbesondere zum Bilden von Stützstrukturen zerlegbarer Möbel, Raumteiler oder dergleichen verwendbaren Gestellsystems, wobei das Verbindungselement (10; 50) mindestens ein freies Ende (16, 18; 56, 88) aufweist, welches von einer Lösestellung, in welcher es mit einer der Verbindungselementaufnahmen (70; 76; 88) eines der Profilelemente (66; 68; 84; 90; 100; 102) außer Eingriff steht, in einer Verbindungsrichtung (13; 53) in die Verbindungselementaufnahme (70; 76; 88) einführbar ist und nach dem Einführen eine Verbindungsstellung einnimmt, **dadurch gekennzeichnet, daß** das mindestens eine freie Ende (16; 56) mindestens ein Kupplungselement (14; 54) trägt und daß das mindestens eine Kupplungselement (14; 54) quer oder im wesentlichen quer zur Verbindungsrichtung (13; 53) reversibel verformbar ist zum Ausüben einer Kupplungskraft in der Verbindungsstellung quer oder im wesentlichen quer zur Verbindungsrichtung (13; 53).

2. Verbindungselement nach Anspruch 1, **dadurch gekennzeichnet, daß** das Verbindungselement (10; 50) in der Verbindungsstellung kraftschlüssig in der Verbindungselementaufnahme (70; 76; 88) gehalten ist.

3. Verbindungselement nach einem der voranstehenden Ansprüche, **dadurch gekennzeichnet, daß** das mindestens eine Kupplungselement ein Klemmelement (14; 54) ist.

4. Verbindungselement nach einem der voranstehenden Ansprüche, **dadurch gekennzeichnet, daß** das mindestens eine Kupplungselement (14; 54) das mindestens eine freie Ende (16; 56) mindestens teilweise umgibt.

5. Verbindungselement nach einem der voranstehenden Ansprüche, **dadurch gekennzeichnet, daß** das mindestens eine Kupplungselement (14; 54) quer oder im wesentlichen quer zur Verbindungsrichtung (13; 53) elastisch ist.

6. Verbindungselement nach einem der voranstehenden Ansprüche, **dadurch gekennzeichnet, daß** das Verbindungselement (10; 50) eine Kupplungselementaufnahme (20; 60) zum mindestens teilweisen Aufnehmen des Kupplungselements (14; 54) aufweist.

7. Verbindungselement nach Anspruch 6, **dadurch gekennzeichnet, daß** die Kupplungselementaufnahme eine das freie Ende (16; 56) des Verbindungselements (10; 50) mindestens teilweise umgebende Nut (20; 60) umfaßt.

8. Verbindungselement nach Anspruch 7, **dadurch gekennzeichnet, daß** die Kupplungselementaufnahme eine Ringnut (20; 60) umfaßt.

9. Verbindungselement nach einem der voranstehenden Ansprüche, **dadurch gekennzeichnet, daß** das freie Ende (10; 56) des Verbindungselements (10; 50) einen runden, ovalen, quadratischen oder rechteckigen Querschnitt aufweist.

10. Verbindungselement nach einem der voranstehenden Ansprüche, **dadurch gekennzeichnet, daß** das Verbindungselement (10; 50) im wesentlichen zylindrisch ausgebildet ist.

11. Verbindungselement nach einem der voranstehenden Ansprüche, **dadurch gekennzeichnet, daß** das Verbindungselement (10; 50) ein zweites freies Ende (18; 58) aufweist.

12. Verbindungselement nach Anspruch 11, **dadurch gekennzeichnet, daß** das zweite freie Ende (18; 58) mindestens ein zweites Kupplungselement (82) trägt.

13. Vorrichtung nach Anspruch 12, **dadurch gekennzeichnet, daß** das mindestens eine zweite Kupplungselement ein Gewinde (82) ist.

14. Verbindungselement nach einem der Ansprüche 11 bis 13, **dadurch gekennzeichnet, daß** das zweite freie Ende (18; 58) des Verbindungselementes (10; 50) in Form eines Fußes (122) ausgebildet ist.

15. Verbindungselement nach einem der voranstehenden Ansprüche, **dadurch gekennzeichnet, daß** das Kupplungselement ein O-Ring (54) ist.

16. Verbindungselement nach einem der voranstehenden Ansprüche, **dadurch gekennzeichnet, daß** das Kupplungselement eine Federstahlhülse (14) ist.

17. Verbindungselement nach Anspruch 16, **dadurch gekennzeichnet, daß** die Federstahlhülse (14) mindestens zwei das mindestens eine freie Ende (16) mindestens teilweise umgebende Abschnitte (26, 28) umfaßt und daß mehrere, vom mindestens einen freien Ende (16) weg weisend gekrümmte und die mindestens zwei Abschnitte (26, 28) verbindende federnde Stege (42) vorgesehen sind.

18. Verbindungselement nach einem der voranstehenden Ansprüche, **dadurch gekennzeichnet, daß** das Kupplungselement (14; 54) einstückig ausgebildet ist.

19. Verbindungselement nach einem der Ansprüche 6 bis 18, **dadurch gekennzeichnet, daß** die Kupplungselementaufnahme (20; 60) mindestens einen Anschlag (22, 24; 62, 64) aufweist zum Begrenzen einer Relativbewegung des Kupplungselements (14; 54) und des mindestens einen freien Endes (16; 56) in der Verbindungsrichtung (13; 53) und/oder entgegengesetzt zur Verbindungsrichtung (13; 53).

20. Verbindungselement nach Anspruch 19, **dadurch gekennzeichnet, daß** das mindestens eine Kupplungselement (14; 54) in der Lösestellung im wesentlichen kräftefrei an dem mindestens einen Anschlag (22, 24; 62, 64) anliegt und daß sich das mindestens einen Kupplungselement (14; 54) in der Verbindungsstellung an dem mindestens einen Anschlag (22, 24; 62; 44) abstützt.

21. Verbindungselement nach einem der voranstehenden Ansprüche, **dadurch gekennzeichnet, daß** das Verbindungselement (10; 50) mindestens einen Anschlag aufweist zum Festlegen einer Einführtiefe des mindestens einen freien Endes (16, 18; 56, 58) in eine der Verbindungselementaufnahmen (70; 76; 88).

22. Gestellsystem, insbesondere zum Bilden von Stützstrukturen zerlegbarer Möbel, Raumteiler oder dergleichen, mit Profilelementen (66; 68; 84; 90; 100; 102) und mit Verbindungselementen (10; 50) zum Verbinden von mindestens zwei Profilelementen (66; 68; 84; 90; 100; 102) miteinander, wobei mindestens ein Teil der Profilelemente (66; 68; 84; 90; 100; 102) Verbindungselementaufnahmen (70; 76; 88) aufweist, wobei mindestens ein Teil der Verbindungselemente (10; 50) mindestens ein freies Ende (16, 18; 56, 58) aufweist, welches von einer Lösestellung, in welcher es mit einer der Verbindungselementaufnahmen (70; 76; 88) eines Profilelements (66; 68; 84; 90; 100; 102) außer Eingriff steht, in einer Verbindungsrichtung (13; 53) in eine der Verbindungselementaufnahmen einführbar ist und nach dem Einführen eine Verbindungsstellung einnimmt, **dadurch gekennzeichnet, daß** das Gestellsystem mindestens ein Verbindungselement (10; 50) nach einem der voranstehenden Ansprüche umfaßt.

23. Gestellsystem nach Anspruch 22, **dadurch gekennzeichnet, daß** mindestens eines der Verbindungselemente (10; 50) in der Verbindungsstellung in einer der Verbindungselementaufnahmen (70; 76; 88) mindestens eines der Profilelemente (66; 68; 84; 90; 100; 102) kraftschlüssig gehalten ist.

24. Verbindungselement nach einem der Ansprüche 22 oder 23, **dadurch gekennzeichnet, daß** mindestens eine der Verbindungselementaufnahmen (70; 76; 88) in der Verbindungsstellung be- und/oder entlüftbar ist.

25. Gestellsystem nach einem der Ansprüche 22 bis 24, **dadurch gekennzeichnet, daß** die Verbindungselementaufnahme (70; 76; 88) einen zu einem Querschnitt des mindestens einen freien Endes (16, 18; 56, 58) korrespondierenden Querschnitt aufweist.

26. Gestellsystem nach einem der Ansprüche 22 bis 25, **dadurch gekennzeichnet, daß** mindestens eines der Verbindungselemente (10; 50) unlösbar mit einem der Profilelemente (66; 68; 84; 90; 100; 102) verbunden ist.

27. Gestellsystem nach Anspruch 26, **dadurch gekennzeichnet, daß** das mindestens eine Verbindungselement (10; 50) mit dem einen der Profilelemente (66; 68; 84; 90; 100; 102) verklebt und/oder verschraubt ist.

28. Gestellsystem nach einem der Ansprüche 22 bis 27, **dadurch gekennzeichnet, daß** die Verbindungselementaufnahme (88) mindestens eines der Profilelemente (84) mit einem zu dem mindestens einen zweiten Kupplungselement (82) des mindestens einen Verbindungselements (10) korrespondierenden Profilelementkupplungselement versehen ist.

29. Gestellsystem nach Anspruch 28, **dadurch gekennzeichnet, daß** das Profilelementkupplungselement ein Gewinde umfaßt.

30. Gestellsystem nach einem der Ansprüche 22 bis 29, **dadurch gekennzeichnet, daß** mindestens ein Profilelement (68; 84) in Form eines Knotenelements ausgebildet ist und daß das Knotenelement mit mindestens zwei weiteren Profilelementen (66; 90, 100; 102) verbindbar ist.

31. Gestellsystem nach Anspruch 30, **dadurch gekennzeichnet, daß** das Knotenelement (68; 84; 102; 114; 126; 128; 130; 132; 134) mit 2, 3, 4, 5 oder 6 weiteren Profilelementen (90; 100; 102) verbindbar ist.

32. Gestellsystem nach einem der Ansprüche 22 bis 31, **dadurch gekennzeichnet, daß** das Gestellsystem mindestens einen Fuß (120) umfaßt.

33. Gestellsystem nach Anspruch 32, **dadurch gekennzeichnet, daß** der mindestens eine Fuß (120) in eine Verbindungselementaufnahme (70; 76; 88) eines der Profilelemente (66; 68; 84; 90; 100; 102) einführbar ist.

34. Gestellsystem nach Anspruch 33, **dadurch gekennzeichnet, daß** der mindestens eine Fuß (120) in eine Verbindungselementaufnahme (70; 76; 88) eines der Profilelemente (66; 68; 84; 90; 100; 102) einschraubbar ist.

35. Gestellsystem nach einem der Ansprüche 22 bis 34, **dadurch gekennzeichnet, daß** mindestens ein Profilelement (90; 100; 102) rohrförmig ausgebildet ist.

36. Gestellsystem nach einem der Ansprüche 22 bis 35, **dadurch gekennzeichnet, daß** mindestens ein Profilelement (84; 104; 108; 114; 126; 128; 130; 132; 134) abgewinkelt ist zum Verbinden mit mindestens zwei weiteren Profilelementen (66; 68; 90; 100; 102) in quer zueinander verlaufenden Verbindungsrichtungen (13; 53).

37. Gestellsystem nach einem der Ansprüche 22 bis 36, **dadurch gekennzeichnet, daß** die Profilelemente (90; 100) einen runden oder eckigen äußeren Querschnitt aufweisen.

38. Gestellsystem nach einem der Ansprüche 22 bis 37, **dadurch gekennzeichnet, daß** die Profilelemente (90; 100) eine Außenhülle (94; 98) aufweisen und daß die mindestens eine Verbindungselementaufnahme (76) und die Außenhülle (94; 98) verbindende Trägerelemente (96) vorgesehen sind.

39. Gestellsystem nach einem der Ansprüche 22 bis 38, **dadurch gekennzeichnet, daß** mindestens eines der Profilelemente (66; 68; 84; 90; 100; 102) einen Anschlag aufweist zum Begrenzen einer Einführtiefe des Verbindungselements (10; 50) in die Verbindungselementaufnahme (70; 76; 88).
